# EUROPÄISCHE PATENTSCHRIFT

(11) **EP 3 372 451 B1**
(45) Veröffentlichungstag und Bekanntmachung des Hinweises auf die Patenterteilung: **24.07.2019**
(21) Anmeldenummer: 18159857.4
(22) Anmeldetag: 05.03.2018
(51) Int. Cl.: B60R 9/058

(54) **DACHLAGER FÜR EINEN DACHTRÄGER IN LEICHTBAUWEISE**
ROOF BEARING FOR A ROOF RACK IN LIGHTWEIGHT CONSTRUCTION
SANGLE DE TOIT POUR UN SUPPORT DE TOIT DE CONSTRUCTION LÉGÈRE

(30) Priorität: 10.03.2017 DE 102017203974
(43) Veröffentlichungstag der Anmeldung: 12.09.2018
(73) Patentinhaber: Kocak, Serhat, 71032 Böblingen (DE)
(72) Erfinder: Kocak, Serhat, 71032 Böblingen (DE); Weber, Alexander, 71296 Heimsheim (DE); Fischer, Sven, 75365 Calw (DE); Rapp, Harald, 71034 Böblingen (DE)
(74) Vertreter: Kohler Schmid Möbus Patentanwälte

(56) Entgegenhaltungen:
- WO-A1-2008/076037
- DE-A1- 10 314 680
- DE-A1-102009 051 561
- DE-A1-102011 014 911
- DE-A1-102011 109 622
- DE-A1-102014 101 464

## Beschreibung

### Technisches Gebiet

Die Erfindung betrifft ein Dachlager für einen Dachträger in Leichtbauweise. Die Erfindung betrifft weiterhin ein Verfahren zur Herstellung eines solchen Dachlagers.

### Stand der Technik

Die WO 2013/153091 A1 offenbart ein Dachlager für einen Dachträger mit einer Grundplatte, zwei an dieser Grundplatte beabstandet angeordnete Bolzen und einer Aufnahme für ein Verriegelungselement des Dachträgers zwischen den Bolzen. Das Dokument DE102009051561 A1 offenbart ein Dachlager nach dem Oberbegriff des Anspruchs 1.

Nachteilig ist das relative hohe Gewicht der aus dem Stand der Technik bekannten Dachlager und das relativ aufwändige Herstellungsverfahren, da hier Schmiedetechniken eingesetzt werden, um die erforderliche Festigkeit des Dachlagers zu erreichen.

Es ist daher Aufgabe der Erfindung, ein Dachlager in Leichtbauweise bereitzustellen, welches auf einfache Weise angefertigt werden kann. Es ist weiterhin Aufgabe der Erfindung, ein Verfahren zur Herstellung eines Dachlagers bereitzustellen.

Die Aufgabe wird durch ein Dachlager gemäß Anspruch 1 gelöst. Die Merkmale des erfindungsgemäßen Verfahrens sind in Anspruch 11 angegeben. Vorteilhafte Ausgestaltungen ergeben sich aus den jeweils rückbezogenen Unteransprüchen.

### Offenbarung der Erfindung

Das erfindungsgemäße Dachlager für einen an dem Dach eines Kraftfahrzeugs, insbesondere in Form eines Automobils, befestigbaren Dachträger weist eine Grundplatte mit einem Bodenabschnitt und zwei Bolzen und eine Aufnahme für ein Verriegelungselement des Dachträgers auf. Die Bolzen sind in gleichem Abstand auf jeweils einer Seite der Aufnahme angeordnet. Hierbei weist die Grundplatte Blech auf, insbesondere ist die Grundplatte bevorzugt aus Blech ausgebildet. Das Dachlager ist dadurch gekennzeichnet, dass die Grundplatte im montierten Zustand des Dachlagers vom Bodenabschnitt nach oben gebogene Seitenwände aufweist, derart, dass die Grundplatte in Längsrichtung zumindest abschnittsweise einen U-förmigen Querschnitt aufweist. Vorteilhaft weist ein solches Dachlager bei geringerem Gewicht als ein geschmiedetes Dachlager eine vergleichbare Stabilität auf. So kann das Gewicht des Dachlagers von typischerweise 55 g auf etwa 40 g bis 45 g reduziert werden. Die Bezeichnungen "oben", "unten" und dergleichen beziehen sich im Rahmen der vorliegenden Erfindung auf den montierten Zustand des Dachlagers. Bevorzugt weist die Grundplatte in Richtung ihrer Längsachse zu mehr als 50% einen U-förmigen Querschnitt auf.

Das Dachlager ist durch zumindest ein Paar von Querlaschen gekennzeichnet. Hierbei ist jeweils eine Querlasche an jeweils einer nach oben gebogenen Seitenwand ausgebildet. Zwischen dem Paar von Querlaschen ist bevorzugt eine Öffnung angeordnet, die sich parallel zu der Längsachse der Grundplatte durch das jeweilige Paar von Querlaschen hindurch erstreckt. Insbesondere kann die vorteilhafte Ausführungsform durch mehrere Paare von Querlaschen gekennzeichnet sein, wobei zwischen zwei Querlaschen, welche jeweils ein Paar bilden, vorzugsweise jeweils eine Öffnung angeordnet ist. Vorteilhaft können die Paare von Querlaschen mit Öffnungen zur Führung und Abstützung von Auflagerelementen des Dachträgers verwendet werden. Durch die Öffnungen können Toleranzen bei der Fertigung der Auflagerelemente von Dachträgern ausgeglichen werden. Ferner können die Berührungsflächen zwischen Querlasche und Auflagerelement zum Schutz vor Korrosion der Auflagerelemente beschichtet werden. Zur Ausbildung der Querlaschen kann Material aus der Grundplatte durch Herauspressen verwendet werden.

Eine vorteilhafte Ausführungsform des Dachlagers ist dadurch gekennzeichnet, dass die Öffnung mindestens eines Paares von Querlaschen zwei Abschnitte aufweist, wobei ein Abschnitt breiter ist als der andere Abschnitt, insbesondere, dass zwei Paare von Querlaschen jeweils eine Öffnung mit zwei solchen Abschnitten aufweisen. Vorteilhaft kann durch ein Paar von Querlaschen mit einer solchen Öffnung die Bewegung eines Auflagerelements sowohl parallel als auch senkrecht zur Längsachse der Grundplatte kontrolliert bzw. begrenzt werden.

Eine weitere Ausführungsform des Dachlagers ist dadurch gekennzeichnet, dass jeweils ein Paar von Querlaschen jeweils zwischen dem nächstliegenden Bolzen und der Aufnahme angeordnet ist.

Eine vorteilhafte Ausführungsform des Dachlagers ist dadurch gekennzeichnet, dass jeweils ein Paar von Querlaschen an jeweils einem Ende der Grundplatte angeordnet ist. Vorteilhaft kann durch eine Anordnung eines Paares von Querlaschen nahe der Aufnahme und eines Paares von Querlaschen am Ende der Grundplatte ein Auflagerelement des Dachträgers besonders kontrolliert entlang der Längsachse der Grundplatte angeordnet werden.

Eine weitere Ausführungsform des Dachlagers ist dadurch gekennzeichnet, dass zumindest eine Querlasche an der jeweiligen Seitenwand gebogen ausgebildet ist.

Eine weitere Ausführungsform des Dachlagers ist dadurch gekennzeichnet, dass die Aufnahme zwei längliche Erhebungen aufweist, welche in Längsrichtung der Grundplatte angeordnet sind. Vorteilhaft sorgen die länglichen Erhebungen für eine zusätzliche Stabilität des Dachlagers im zentralen Bereich.

Eine vorteilhafte Ausführungsform des Dachlagers ist dadurch gekennzeichnet, dass die Aufnahme eine Durchgangsbohrung aufweist, durch welche insbesondere ein Stift oder ein Bolzen hindurchgeführt werden kann. Vorteilhaft kann durch Bolzen das Dachlager besonders einfach an dem Dach und durch einen Stift der Dachträger an dem Dachlager fixiert werden.

Eine vorteilhafte Ausführungsform des Dachlagers ist durch zwei Noppen gekennzeichnet, welche an der Durchgangsbohrung im zentralen Bereich der Grundplatte mit einem räumlichen Versatz entlang der Längsachse der Grundplatte auf der unteren Seite der Grundplatte angeordnet sind, derart, dass die Symmetrieachse der Durchgangsbohrung zwischen den Noppen symmetrisch angeordnet ist. Vorteilhaft kann durch derart angeordnete Noppen die Rotationsbewegung eines Verriegelungsstiftes kontrolliert bzw. eine zu weite Drehung des Stiftes blockiert werden.

Eine weitere Ausführungsform des Dachlagers ist dadurch gekennzeichnet, dass die Grundplatte im Längsschnitt einen ersten Abschnitt und einen zweiten Abschnitt und einen dritten Abschnitt aufweist, wobei der zweite Abschnitt an der Aufnahme angeordnet ist und in Bezug auf den ersten Abschnitt und den dritten Abschnitt einen räumlichen Versatz nach oben aufweist. Vorteilhaft befindet sich dann ein Zwischenraum zwischen dem Dachlager und dem Dach, in welchem ein Ende eines Verriegelungsstiftes angeordnet werden kann.

Eine vorteilhafte Ausführungsform des Dachlagers ist dadurch gekennzeichnet, dass die Oberfläche der Grundplatte auf der unteren Seite um die Bolzen Aussparungen aufweist, und in diesen Aussparungen um die Bolzen O-Ringe zur Abdichtung angeordnet sind. Vorteilhaft kann hierdurch ein Eindringen von Flüssigkeit in Zwischenräume zwischen den Bolzen und den Durchgangsbohrungen verhindert werden.

Eine vorteilhafte Ausführungsform des Dachlagers ist dadurch gekennzeichnet, dass die äußeren Querlaschen im montierten Zustand des Dachlagers eine größere Ausdehnung in vertikaler Richtung als die inneren Querlaschen aufweisen, derart, dass die äußeren Querlaschen am Dachlager die gleiche Höhe haben wie die inneren Querlaschen. Die oberen Seitenflächen der inneren und äußeren Querlaschen liegen also im montierten Zustand des Dachlagers alle in der gleichen horizontalen Ebene. Vorteilhaft kann diese Ausführungsform vereinfacht und mit größerer Fertigungsstabilität hergestellt werden, insbesondere bei der Verwendung von Folgeverbundwerkzeug.

Ein Verfahren zur Herstellung eines erfindungsgemäßen Dachlagers nach Anspruch 1 ist dadurch gekennzeichnet, dass die Seitenwände der Grundplatte des Dachlagers im montierten Zustand von dem Bodenabschnitt nach oben gebogen werden. Vorteilhaft lässt sich der abschnittsweise U-förmige Querschnitt der Grundplatte bei dem erfindungsgemäßen Dachlager aus Blech besonders einfach durch Verbiegung bewirken.

Eine vorteilhafte Ausführungsform des Verfahrens ist dadurch gekennzeichnet, dass in die Grundplatte Löcher für die Bolzen gestanzt werden. Vorteilhaft lassen sich die Durchgangsbohrungen bei dem Dachlager durch Stanzen besonders schnell herstellen. Eine weitere Ausführungsform des Verfahrens ist dadurch gekennzeichnet, dass die Aussparungen für die O-Ringe eingeprägt werden.

Eine weitere Ausführungsform des Verfahrens ist dadurch gekennzeichnet, dass zumindest eine Querlasche durch Abbiegen von der jeweiligen Seitenwand ausgebildet wird. Vorteilhaft lassen sich die Querlaschen durch Umbiegen besonders einfach in die gewünschte Position bringen.

### Kurze Beschreibung der Zeichnung

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungswesentliche Einzelheiten zeigt. Die verschiedenen Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigen:
- Fig. 1: eine Darstellung des erfindungsgemäßen Dachlagers;
- Fig. 2: eine Aufsicht auf das Dachlager;
- Fig. 3: eine Seitenansicht auf das Dachlager;
- Fig. 4: einen Längsschnitt durch das Dachlager;
- Fig. 5: eine Vorderansicht auf das Dachlager;
- Fig. 6: eine Ansicht von unten auf das Dachlager;
- Fig. 7: eine Darstellung des Dachlagers mit Auflagerelementen des Dachträgers;
- Fig. 8: einen Längsschnitt durch das Dachlager mit Auflagerelementen des Dachträgers; und
- Fig. 9: eine Seitenansicht auf das Dachlager gemäß einer zweiten Ausführungsform.

### Ausführungsform(en) der Erfindung

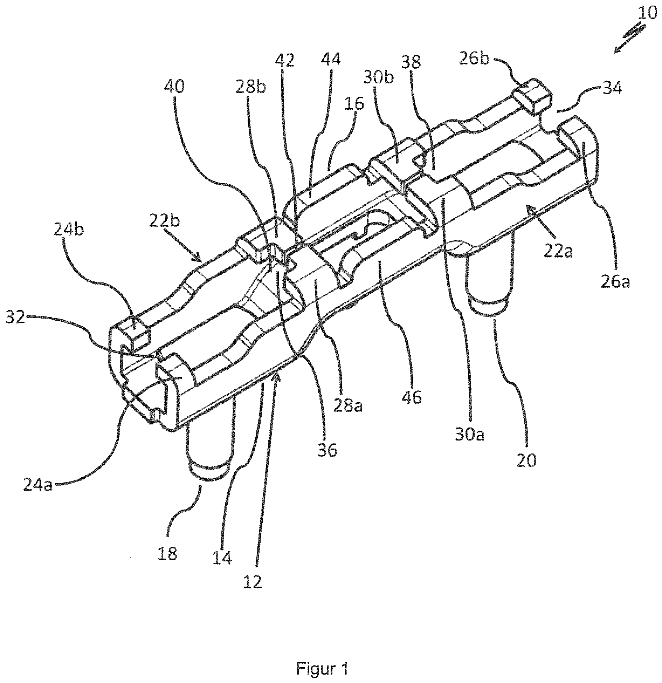

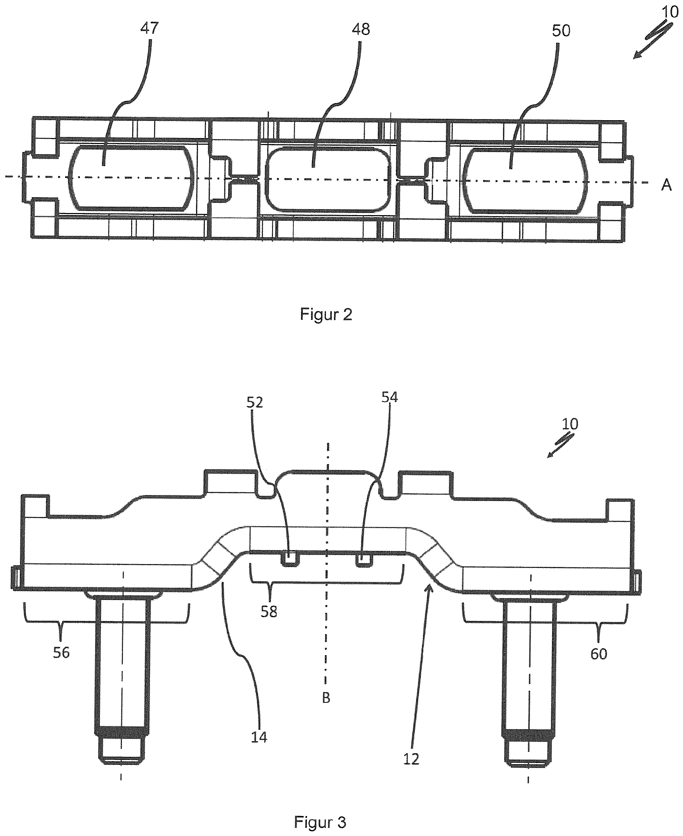

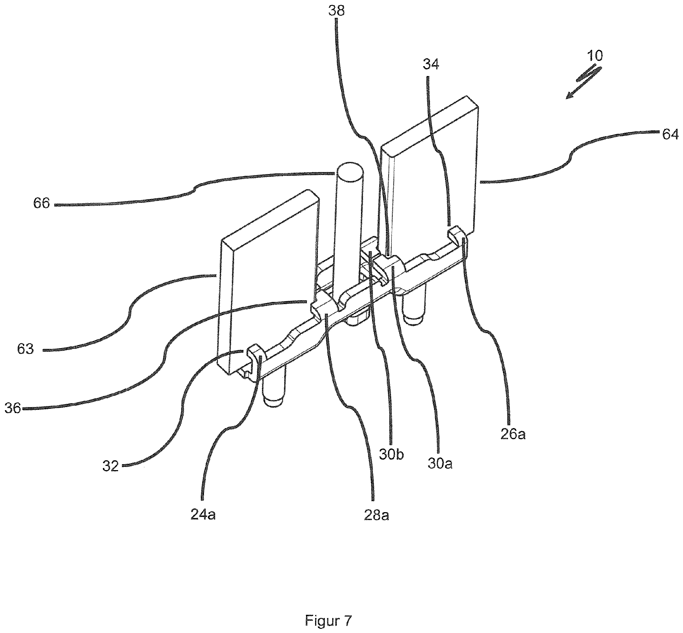

In Figur 1 ist das erfindungsgemäße Dachlager **10** dargestellt. Es weist eine Grundplatte **12** mit einem Bodenabschnitt **14** auf. An der Grundplatte 12 ist eine Aufnahme **16** für ein Verriegelungselement des Dachträgers (vgl. Figur 7) angeordnet. In dem Bodenabschnitt 14 der Grundplatte 12 sind ferner ein erster Bolzen **18** und ein zweiter Bolzen **20** angeordnet. Die Grundplatte 12 weist ferner an dem Bodenabschnitt 14 ausgeformte im montierten Zustand des Dachlagers nach oben gebogene Seitenwände **22a, 22b** auf. An diesen nach oben gebogenen Seitenwänden 22a, 22b sind erste äußere Querlaschen **24a, 24b** und zweite äußere Querlaschen **26a, 26b** jeweils an einem Ende der Grundplatte 12 ausgebildet. Zwischen dem ersten Bolzen 18 und der Aufnahme 16 sind erste innere Querlaschen **28a, 28b** ausgebildet. Zwischen dem zweiten Bolzen 20 und der Aufnahme 16 sind zweite innere Querlaschen **30a, 30b** ausgebildet. Zwischen den einander gegenüberliegenden Querlaschen 24a, 24b, 26a, 26b, 28a, 28b, 30a, 30b, die jeweils ein Paar bilden, ist jeweils eine Öffnung **32, 34, 36, 38** in Form einer Schlitzöffnung angeordnet. Jede Öffnung 32, 34, 36, 38 erstreckt sich parallel zu der Längsachse A der Grundplatte (vgl. Figur 2) durch das jeweilige Paar von Querlaschen 24a, 24b, 26a, 26b, 28a, 28b, 30a, 30b hindurch. Die Öffnung 36 zwischen dem Paar der inneren Querlaschen 28a, 28b weist einen ersten breiten Abschnitt **40** und einen zweiten schmalen Abschnitt **42** auf. Die Öffnung 38 zwischen dem Paar der inneren Querlaschen 30a, 30b weist entsprechende Abschnitte auf. Die Aufnahme 16 weist ein erstes längliches Element **44** und ein zweites längliches Element **46** auf, welche an der Grundplatte 12 ausgebildet sind.

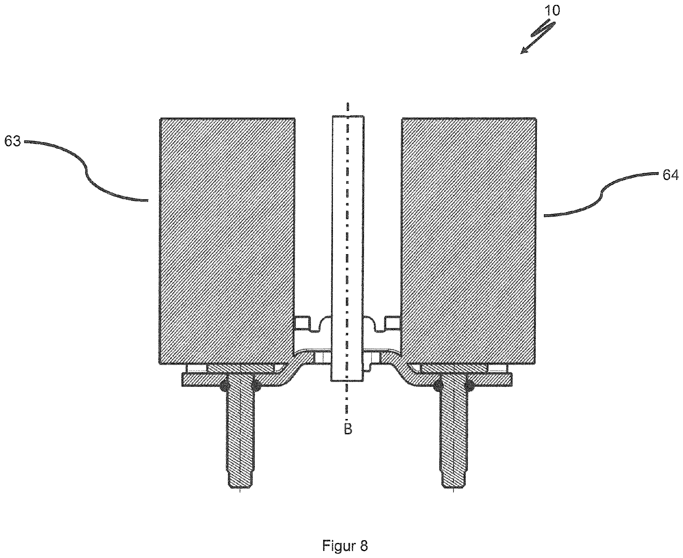

In Figur 2 ist eine Aufsicht auf das Dachlager 10 mit der Längsachse A dargestellt. Die Grundplatte 12 weist eine erste Durchgangsbohrung **47,** eine zweite Durchgangsbohrung **48** und eine dritte Durchgangsbohrung **50** auf, durch welche ein Stift (vgl. Figuren 7 und 8) oder ein Bolzen 18, 20 hindurchgeführt werden kann.

In Figur 3 ist eine Seitenansicht des Dachlagers 10 dargestellt. An dem Bodenabschnitt 14 sind an der unteren Seite Noppen **52** und **54** angeordnet. Die Symmetrieachse B durch die zweite Durchgangsbohrung 48 (siehe Figur 2) liegt symmetrisch zwischen den Noppen 52 und 54. Die Grundplatte 12 weist einen ersten Abschnitt **56,** einen zweiten Abschnitt **58** und einen dritten Abschnitt **60** auf. Diese Abschnitte sind miteinander verbunden. Der zweite Abschnitt 58 weist im Vergleich zu dem ersten Abschnitt 56 und dem zweiten Abschnitt 60 einen Versatz nach oben auf.

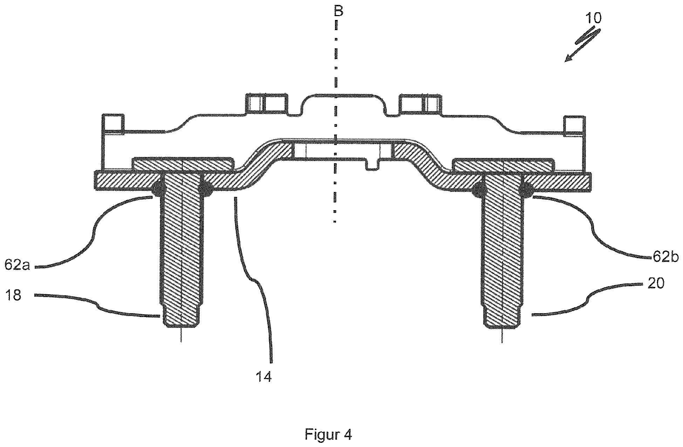

In Figur 4 ist ein Längsschnitt durch das Dachlager 10 entlang der Längsachse A (vgl. Figur 2) dargestellt. Der Bodenabschnitt 14 weist an der unteren Oberfläche Aussparungen auf, in welchen O-Ringe **62a, 62b** an den Bolzen 18, 20 zur Dichtung angeordnet sind.

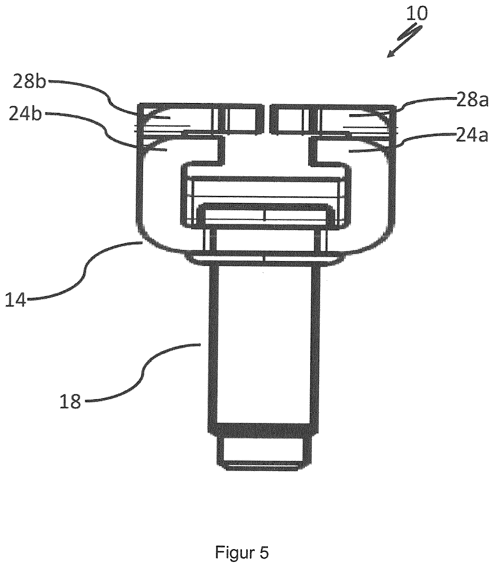

In Figur 5 ist eine Ansicht auf das Dachlager 10 von vorne dargestellt. Gezeigt wird einer der Bolzen 18, 20, hier exemplarisch der Bolzen 18, der Bodenabschnitt 14 sowie eines der Paare von äußeren Querlaschen 24a, 24b, 26a, 26b, hier exemplarisch das Paar von äußeren Querlasche 24a, 24b und eines der Paare von inneren Querlaschen 28a, 28b, 30a, 30b hier exemplarisch das Paar der inneren Querlaschen 28a, 28b.

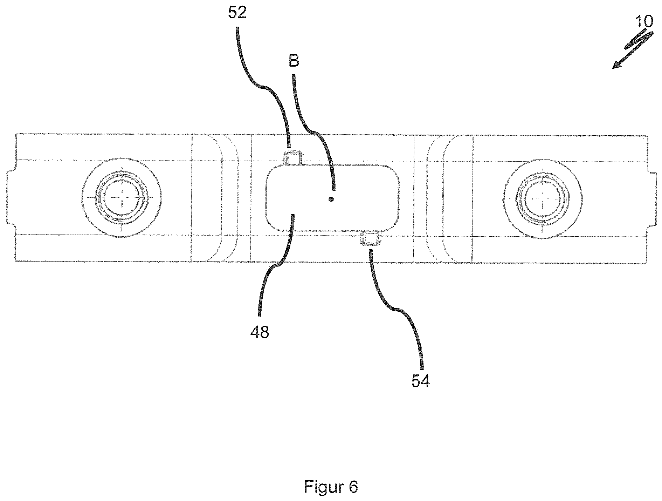

In Figur 6 ist eine Ansicht von unten auf das Dachlager 10 dargestellt. Die Noppen 52, 54 sind an der zweiten Durchgangsbohrung 48 derart angeordnet, dass die Symmetrieachse B durch die zweite Durchgangsbohrung 48, hier durch einen Punkt markiert, symmetrisch zwischen den Noppen 52, 54 angeordnet ist.

In Figur 7 ist das Dachlager 10 mit zwei in den Öffnungen 32, 34, 36, 38 zwischen den Querlaschen 24a, 24b, 26a, 26b, 28a, 28b, 30a, 30b (vgl. Figur 1) angeordneten Auflagerelementen **63, 64** des Dachträgers und einem Verriegelungselement **66** dargestellt, wobei in der Figur nur die Querlaschen 24a, 26a, 28a, 30a, 30b gezeigt werden.

In Figur 8 ist das Dachlager 10 mit zwei in den Öffnungen 32, 34, 36, 38 (vgl. Figur 1) zwischen den Querlaschen 24a, 24b, 26a, 26b, 28a, 28b, 30a, 30b (vgl. Figur 1) angeordneten Auflagerelementen 63, 64 des Dachträgers im Längsschnitt entlang der Längsachse A (vgl. Figur 2) des Dachlagers 10 dargestellt.

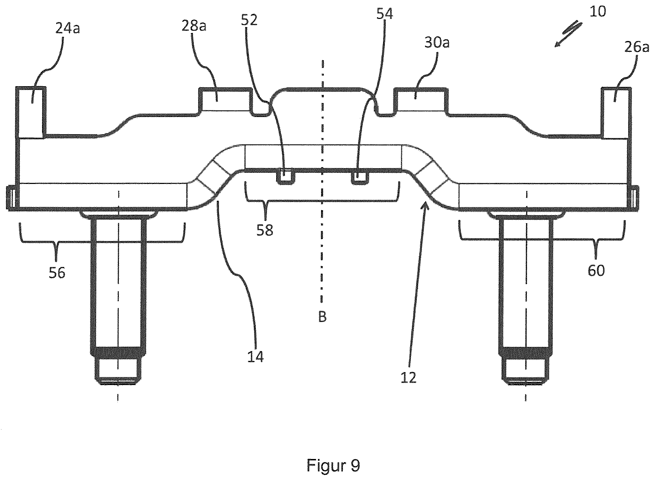

In Figur 9 ist eine Seitenansicht auf das Dachlager 10 gemäß einer zweiten Ausführungsform dargestellt, bei welcher die äußeren Querlaschen 24a, 24b, 26a, 26b, hier exemplarisch gezeigt für die äußeren Querlaschen 24a, 26a, eine größere Ausdehnung in vertikaler Richtung, also senkrecht zur Längsachse A der Grundplatte 12, aufweisen, als die inneren Querlaschen 28a, 28b, 30a, 30b, hier exemplarisch gezeigt für die inneren Querlaschen 28a, 30a. Die vertikale Ausdehnung der äußeren Querlaschen 24a, 24b, 26a, 26b ist dabei so gewählt, dass sie im montierten Zustand des Dachlagers 10 die gleiche Höhe haben wie die inneren Querlaschen 24a, 24b, 26a, 26b. Die oberen Seitenflächen der inneren Querlaschen 28a, 28b, 30a, 30b und der äußeren Querlaschen 24a, 24b, 26a, 26b liegen also im montierten Zustand des Dachlagers 10 alle in einer horizontalen Ebene.

Unter Vornahme einer Zusammenschau aller Figuren der Zeichnung betrifft die Erfindung somit zusammenfassend ein Dachlager 10 in Leichtbauweise für einen an einem Dach befestigbaren Dachträger. Das Dachlager 10 weist eine Grundplatte 12 mit einem Bodenabschnitt 14 auf. Die Seitenwände 22a, 22b der Grundplatte sind im montierten Zustand nach oben gebogen. Hierdurch nimmt der Querschnitt in Längsrichtung der Grundplatte 12 zumindest abschnittsweise eine U-förmige Form an. An der Grundplatte 12 sind ein erster Bolzen 18 und ein zweiter Bolzen 20 angeordnet. Zwischen diesen Bolzen 18, 20 ist an der Grundplatte eine Aufnahme 16 für ein Verriegelungselement 66 angeordnet, wobei die Bolzen 18, 20 von dieser Aufnahme 16 den gleichen Abstand haben.

## Patentansprüche

1. Dachlager (10) für einen an einem Dach befestigbaren Dachträger, wobei das Dachlager (10) eine Grundplatte (12) mit einem Bodenabschnitt (14) und einen ersten Bolzen (18) und einen zweiten Bolzen (20) und eine Aufnahme (16) für ein Verriegelungselement (66) des Dachträgers aufweist, wobei die Bolzen (18, 20) in gleichem Abstand auf jeweils einer Seite der Aufnahme (16) angeordnet sind, **dadurch gekennzeichnet, dass** die Grundplatte (12) Blech aufweist und die Grundplatte (12) im montierten Zustand des Dachlagers vom Bodenabschnitt (14) nach oben gebogene Seitenwände (22a, 22b) aufweist, derart, dass die Grundplatte (12) in Richtung der Längsachse (A) der Grundplatte (12) zumindest abschnittsweise einen U-förmigen Querschnitt aufweist, wobei das Dachlager zumindest ein Paar von Querlaschen (24a, 24b, 26a, 26b, 28a, 28b, 30a, 30b) aufweist, wobei jeweils eine Querlasche (24a, 24b, 26a, 26b, 28a, 28b, 30a, 30b) an jeweils einer nach oben gebogenen Seitenwand (22a, 22b) ausgebildet ist, wobei zwischen dem Paar von Querlaschen (24a, 24b, 26a, 26b, 28a, 28b, 30a, 30b) eine Öffnung (32, 34, 36, 38) angeordnet ist, die sich parallel zu der Längsachse der Grundplatte durch das Paar von Querlaschen (24a, 24b, 26a, 26b, 28a, 28b, 30a, 30b) hindurch erstreckt, insbesondere durch mehrere Paare von Querlaschen (24a, 24b, 26a, 26b, 28a, 28b, 30a, 30b), wobei zwischen zwei Querlaschen (24a, 24b, 26a, 26b, 28a, 28b, 30a, 30b), welche jeweils ein Paar bilden, jeweils eine Öffnung angeordnet ist (32, 34, 36, 38).

2. Dachlager nach Anspruch 1 , **dadurch gekennzeichnet, dass** die Öffnung (32, 34, 36, 38) mindestens eines Paares von Querlaschen (24a, 24b, 26a, 26b, 28a, 28b, 30a, 30b) zwei Abschnitte (40, 42) aufweist, wobei ein Abschnitt (40, 42) breiter ist als der andere Abschnitt (40, 42), insbesondere, dass zwei Paare von Querlaschen (24a, 24b, 26a, 26b, 28a, 28b, 30a, 30b) jeweils eine Öffnung (32, 34, 36, 38) mit zwei solchen Abschnitten (40, 42) aufweisen.

3. Dachlager nach einem der Ansprüche 1 bis 2, **dadurch gekennzeichnet, dass** jeweils ein Paar von Querlaschen (24a, 24b, 26a, 26b, 28a, 28b, 30a, 30b) zwischen dem jeweiligen nächstliegenden Bolzen (18, 20) und der Aufnahme (16) angeordnet sind.

4. Dachlager nach einem der Ansprüche 1 bis 3, **dadurch gekennzeichnet, dass** jeweils ein Paar von Querlaschen (24a, 24b, 26a, 26b, 28a, 28b, 30a, 30b) an jeweils einem Ende der Grundplatte (12) angeordnet ist.

5. Dachlager nach einem der Ansprüche 1 bis 4, **dadurch gekennzeichnet, dass** zumindest eine Querlasche (24a, 24b, 26a, 26b, 28a, 28b, 30a, 30b) an der jeweiligen Seitenwand (22a, 22b) gebogen ausgebildet ist.

6. Dachlager nach einem der vorigen Ansprüche, **dadurch gekennzeichnet, dass** die Aufnahme (16) zwei längliche Erhebungen (44, 46) aufweist, welche in Richtung der Längsachse (A) oder parallel zu Richtung der Längsachse (A) der Grundplatte (12) angeordnet oder ausgebildet sind.

7. Dachlager nach einem der vorigen Ansprüche, **dadurch gekennzeichnet, dass** die Aufnahme (16) mindestens eine Durchgangsbohrung (47, 48, 50), insbesondere drei Durchgangsbohrungen (47, 48, 50), aufweist, durch welche insbesondere ein Stift oder ein Bolzen hindurchgeführt werden kann.

8. Dachlager nach Anspruch 7, **gekennzeichnet durch** zwei Noppen (52, 54), welche an einer Durchgangsbohrung (47, 48, 50) in der Mitte der Grundplatte (12) mit einem räumlichen Versatz entlang der Längsachse der Grundplatte (12) auf der unteren Seite des Bodenabschnitts (14) angeordnet sind, derart, dass die Symmetrieachse (B) der Durchgangsbohrung (47, 48, 50) zwischen den Noppen (52, 54) symmetrisch angeordnet ist.

9. Dachlager nach einem der vorigen Ansprüche, **dadurch gekennzeichnet, dass** die Grundplatte (12) im Längsschnitt einen ersten Abschnitt (56) und einen zweiten Abschnitt (58) und einen dritten Abschnitt (60) aufweist, wobei der zweite Abschnitt (58) an der Aufnahme (16) angeordnet ist und in Bezug auf den ersten Abschnitt (56) und den dritten Abschnitt (60) einen räumlichen Versatz nach oben aufweist.

10. Dachlager nach einem der vorigen Ansprüche, **dadurch gekennzeichnet, dass** die Oberfläche des Bodenabschnitts (14) der Grundplatte (12) auf der unteren Seite um die Bolzen (18, 20) Aussparungen aufweist, und in diesen Aussparungen um die Bolzen (18, 20) O-Ringe (62) zur Abdichtung angeordnet sind.

11. Verfahren zur Herstellung eines Dachlagers nach Anspruch 1, **dadurch gekennzeichnet, dass** die Seitenwände (22a, 22b) der Grundplatte (12) des Dachlagers im montierten Zustand von dem Bodenabschnitt (14) nach oben gebogen werden.

12. Verfahren zur Herstellung eines Dachlagers nach Anspruch 11, **dadurch gekennzeichnet, dass** in die Grundplatte (12) Durchgangsbohrungen (47, 48, 50) für die Bolzen (18, 20) gestanzt werden.

13. Verfahren zur Herstellung eines Dachlagers nach einem der Ansprüche 11 bis 12 in Verbindung mit Anspruch 10, **dadurch gekennzeichnet, dass** in die Grundplatte (12) Aussparungen für die O-Ringe (62) eingeprägt werden.

14. Verfahren zur Herstellung eines Dachlagers nach einem der Ansprüche 11 bis 13 in Verbindung mit einem der Ansprüche 1 bis 10, **dadurch gekennzeichnet, dass** zumindest eine Querlasche (24a, 24b, 26a, 26b, 28a, 28b, 30a, 30b) durch Abbiegen von der jeweiligen Seitenwand (22a, 22b) ausgebildet wird.

## Claims

1. Roof bearing (10) for a roof rack which can be attached to a roof, the roof bearing (10) having a base plate (12) comprising a base portion (14) and a first bolt (18) and a second bolt (20) and a receptacle (16) for a locking element (66) of the roof rack, the bolts (18, 20) being arranged at the same distance, each on one side of the receptacle (16), **characterized in that** the base plate (12) comprises sheet metal and, in the assembled state of the roof bearing, the base plate (12) has side walls (22a, 22b) which are bent upwards from the base portion (14) in such a way that the base plate (12) has a U-shaped cross section, at least in portions, in the direction of the longitudinal axis (A) of the base plate (12), the roof bearing having at least one pair of transverse tabs (24a, 24b, 26a, 26b, 28a, 28b, 30a, 30b), in each case a transverse tab (24a, 24b, 26a, 26b, 28a, 28b, 30a, 30b) being formed on each upwardly bent side wall (22a, 22b), an opening (32, 34, 36, 38) being arranged between the pair of transverse tabs (24a, 24b, 26a, 26b, 28a, 28b, 30a, 30b), which opening extends in parallel with the longitudinal axis of the base plate, through the pair of transverse tabs (24a, 24b, 26a, 26b, 28a, 28b, 30a, 30b), in particular through a plurality of pairs of transverse tabs (24a, 24b, 26a, 26b, 28a, 28b, 30a, 30b), an opening (32, 34, 36, 38) being arranged in each case between two transverse tabs (24a, 24b, 26a, 26b, 28a, 28b, 30a, 30b) which each form a pair.

2. Roof bearing according to claim 1, **characterized in that** the opening (32, 34, 36, 38) of at least one pair of transverse tabs (24a, 24b, 26a, 26b, 28a, 28b, 30a, 30b) has two portions (40, 42), one portion (40, 42) being wider than the other portion (40, 42), in particular **in that** two pairs of transverse tabs (24a, 24b, 26a, 26b, 28a, 28b, 30a, 30b) each have an opening (32, 34, 36, 38) comprising two such portions (40, 42).

3. Roof bearing according to either claim 1 or claim 2, **characterized in that** in each pair of transverse tabs (24a, 24b, 26a, 26b, 28a, 28b, 30a, 30b) is arranged between the corresponding nearest bolt (18, 20) and the receptacle (16).

4. Roof bearing according to any of claims 1 to 3, **characterized in that** each pair of transverse tabs (24a, 24b, 26a, 26b, 28a, 28b, 30a, 30b) is arranged at one end of the base plate (12) in each case.

5. Roof bearing according to any of claims 1 to 4, **characterized in that** at least one transverse tab (24a, 24b, 26a, 26b, 28a, 28b, 30a, 30b) is in a bent form on the corresponding side wall (22a, 22b).

6. Roof bearing according to any of the preceding claims, **characterized in that** the receptacle (16) has two elongate elevations (44, 46) which are arranged or formed in the direction of the longitudinal axis (A) or in parallel with the direction of the longitudinal axis (A) of the base plate (12).

7. Roof bearing according to any of the preceding claims, **characterized in that** the receptacle (16) has at least one through-hole (47, 48, 50), in particular three through-holes (47, 48, 50), through which a pin or a bolt in particular can be passed.

8. Roof bearing according to claim 7, **characterized by** two studs (52, 54) which are arranged on a through-hole (47, 48, 50) in the center of the base plate (12), at a spatial offset along the longitudinal axis of the base plate (12) on the lower face of the base portion (14), such that the axis of symmetry (B) of the through-hole (47, 48, 50) is arranged symmetrically between the studs (52, 54).

9. Roof bearing according to any of the preceding claims, **characterized in that** the base plate (12) has a first portion (56) and a second portion (58) and a third portion (60) in the longitudinal section, the second portion (58) being arranged on the receptacle (16) and having an upward spatial offset with respect to the first portion (56) and the third portion (60).

10. Roof bearing according to any of the preceding claims, **characterized in that** the surface of the base portion (14) of the base plate (12) has recesses around the bolts (18, 20) on the lower face, and O-rings (62) are arranged in these recesses around the bolts (18, 20) for the purpose of sealing.

11. Method for producing a roof bearing according to claim 1, **characterized in that**, in the assembled state, the side walls (22a, 22b) of the base plate (12) of the roof bearing are bent upwards from the base portion (14).

12. Method for producing a roof bearing according to claim 11, **characterized in that** through-holes (47, 48, 50) for the bolts (18, 20) are punched into the base plate (12).

13. Method for producing a roof bearing according to either claim 11 or claim 12 in conjunction with claim 10, **characterized in that** recesses for the O-rings (62) are impressed into the base plate (12).

14. Method for producing a roof bearing according to any of claims 11 to 13 in conjunction with any of claims 1 to 10, **characterized in that** at least one transverse tab (24a, 24b, 26a, 26b, 28a, 28b, 30a, 30b) is formed by bending from the corresponding side wall (22a, 22b).

## Revendications

1. Monture (10) de toit, destinée à un support de pavillon pouvant être fixé à un pavillon, ladite monture (10) de toit comprenant une platine d'embase (12) munie d'une région inférieure (14), une première cheville (18), une seconde cheville (20) et un logement (16) dédié à un élément (66) de verrouillage dudit support de pavillon, lesdites chevilles (18, 20) étant situées à une même distance sur un côté respectif dudit logement (16), **caractérisée par le fait que** la platine d'embase (12) comprend de la tôle et ladite platine d'embase (12) comporte, à l'état monté de la monture de toit, des parois latérales (22a, 22b) courbées vers le haut à partir de la région inférieure (14), de telle sorte que la platine d'embase (12) présente, au moins par zones, une section transversale configurée en U dans la direction de l'axe longitudinal (A) de ladite platine d'embase (12), ladite monture de toit étant munie d'au moins une paire de pattes transversales (24a, 24b, 26a, 26b, 28a, 28b, 30a, 30b), une patte transversale (24a, 24b, 26a, 26b, 28a, 28b, 30a, 30b) étant ménagée, à chaque fois, sur une paroi latérale respective (22a, 22b) courbée vers le haut, sachant qu'un orifice (32, 34, 36, 38), situé entre la paire de pattes transversales (24a, 24b, 26a, 26b, 28a, 28b, 30a, 30b), s'étend parallèlement à l'axe longitudinal de la platine d'embase en traversant, de part en part, ladite paire de pattes transversales (24a, 24b, 26a, 26b, 28a, 28b, 30a, 30b), de préférence plusieurs paires de pattes transversales (24a, 24b, 26a, 26b, 28a, 28b, 30a, 30b), un orifice (32, 34, 36, 38) étant interposé, à chaque fois, entre deux pattes transversales (24a, 24b, 26a, 26b, 28a, 28b, 30a, 30b) formant respectivement une paire.

2. Monture de toit, selon la revendication 1, **caractérisée par le fait que** l'orifice (32, 34, 36, 38) d'au moins une paire de pattes transversales (24a, 24b, 26a, 26b, 28a, 28b, 30a, 30b) comprend deux régions (40, 42), une région (40, 42) étant plus large que l'autre région (40, 42) ; notamment **par le fait que** deux paires de pattes transversales (24a, 24b, 26a, 26b, 28a, 28b, 30a, 30b) sont respectivement pourvues d'un orifice (32, 34, 36, 38) comprenant deux régions (40, 42) de ce type.

3. Monture de toit, selon l'une des revendications 1 à 2, **caractérisée par le fait qu'**une paire de pattes transversales (24a, 24b, 26a, 26b, 28a, 28b, 30a, 30b) est interposée, à chaque fois, entre le logement (16) et la cheville (18, 20) respectivement la plus proche.

4. Monture de toit, selon l'une des revendications 1 à 3, **caractérisée par le fait qu'**une paire de pattes transversales (24a, 24b, 26a, 26b, 28a, 28b, 30a, 30b) est disposée, à chaque fois, à une extrémité respective de la platine d'embase (12).

5. Monture de toit, selon l'une des revendications 1 à 4, **caractérisée par le fait qu'**au moins une patte transversale (24a, 24b, 26a, 26b, 28a, 28b, 30a, 30b) est de réalisation cintrée sur la paroi latérale (22a, 22b) considérée.

6. Monture de toit, selon l'une des revendications précédentes, **caractérisée par le fait que** le logement (16) est pourvu de deux bossages longilignes (44, 46) disposés, ou ménagés, dans la direction de l'axe longitudinal (A) ou parallèlement à la direction de l'axe longitudinal (A) de la platine d'embase (12).

7. Monture de toit, selon l'une des revendications précédentes, **caractérisée par le fait que** le logement (16) comporte au moins un trou de passage (47, 48, 50), notamment trois trous de passage (47, 48, 50) à travers lesquels, en particulier, une goupille ou une cheville peut être engagée.

8. Monture de toit, selon la revendication 7, **caractérisée par** deux protubérances (52, 54) situées à la face inférieure de la région inférieure (14) au centre de la platine d'embase (12), au niveau d'un trou de passage (47, 48, 50), avec décalage spatial le long de l'axe longitudinal de ladite platine d'embase (12), de façon telle que l'axe de symétrie (B) dudit trou de passage (47, 48, 50) occupe une position symétrique entre lesdites protubérances (52, 54).

9. Monture de toit, selon l'une des revendications précédentes, **caractérisée par le fait que** la platine d'embase (12) est composée, en coupe transversale, d'un premier segment (56), d'un deuxième segment (58) et d'un troisième segment (60), sachant que ledit deuxième segment (58) est situé au niveau du logement (16) et présente un décalage spatial, vers le haut, par rapport audit premier segment (56) et audit troisième segment (60).

10. Monture de toit, selon l'une des revendications précédentes, **caractérisée par le fait que** la surface de la région inférieure (14) de la platine d'embase (12) comporte des évidements à la face inférieure, autour des chevilles (18, 20), et des joints toriques (62) sont logés dans ces évidements, autour desdites chevilles (18, 20), en vue d'assurer l'étanchéité.

11. Procédé de fabrication d'une monture de toit conforme à la revendication 1, **caractérisé par le fait que** les parois latérales (22a, 22b) de la platine d'embase (12) de ladite monture de toit sont courbées vers le haut, à l'état monté, à partir de la région inférieure (14).

12. Procédé selon la revendication 11, dévolu à la fabrication d'une monture de toit et **caractérisé par le fait que** des trous de passage (47, 48, 50), dédiés aux chevilles (18, 20), sont poinçonnés dans la platine d'embase (12).

13. Procédé selon l'une des revendications 11 à 12, dévolu à la fabrication d'une monture de toit conforme à la revendication 10, **caractérisé par le fait que** des évidements, dédiés aux joints toriques (62), sont emboutis dans la platine d'embase (12).

14. Procédé selon l'une des revendications 11 à 13, dévolu à la fabrication d'une monture de toit conforme à l'une des revendications 1 à 10, **caractérisé par le fait qu'**au moins une patte transversale (24a, 24b, 26a, 26b, 28a, 28b, 30a, 30b) est ménagée, par cintrage, à partir de la paroi latérale (22a, 22b) considérée.
